# EUROPEAN PATENT APPLICATION

(11) **EP 4 429 387 A1**
(43) Date of publication of application: **11.09.2024**
(21) Application number: 21962903.7
(22) Date of filing: 04.11.2021
(51) Int. Cl.: H04W 74/08

(54) **RANDOM ACCESS METHOD AND APPARATUS**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2021/128821
(87) International publication number: WO 2023/077386

(57) **Abstract**

Disclosed in the embodiments of the present disclosure are a random access method and apparatus. The method is executed by a first-type terminal, and comprises: determining a first number of instances of transmission performed by the first-type terminal, wherein the first number of instances of transmission is the maximum number of instances of transmission of message 1 performed by the first-type terminal in a mode in which message 3 retransmission four-step random access is not supported; the first number of instances of transmission is less than a second number of instances of transmission performed by a second-type terminal for four-step random access; and the first-type terminal supports message 3 retransmission four-step random access. By means of implementing the embodiments of the present disclosure, a random access delay of a first-type terminal can be shortened, thereby reducing energy consumption.

## Description

### TECHNICAL FIELD

The disclosure relates to the field of communication technologies, and in particular, to a random access method and apparatus.

### BACKGROUND

In related technologies, a first-type terminal that supports four-step random access with message 3 (Msg3) repetition may need to use the same four-step random access not supporting message 3 transmission as a second-type terminal, as well as the maximum number of times of message 1 (Msg1) transmission, during the four-step random access procedure. In order to make sure that the second-type terminal can access a cell successfully, a network device typically configure a relatively large maximum number of times for message 1 transmission in the four-step random access of the second-type terminal. This may result in that in some scenarios, the first-type terminal frequently uses this maximum number of times for the random access procedure, resulting in long access times and high energy consumption.

### SUMMARY

Embodiments of the present disclosure provide a random access method and apparatus, to at least solve the problems of long random access time, large transmission delay, and high energy consumption of the first-type terminal in the related technologies.

In a first aspect, embodiments of the present disclosure provide a random access method, performed by a first-type terminal, including: determining a first number of transmissions for the first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

In the present technical solution, the first number of transmissions for the first-type terminal is determined, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition. Therefore, the first-type terminal can avoid initiating too much unnecessary random access, shorten the delay of random access, and reduce the energy consumption of the first-type terminal.

In a second aspect, embodiments of the present disclosure provide another random access method, performed by a network device, including: determining a first number of transmissions for a first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

In a third aspect, embodiments of the present disclosure provide a communication device. The communication device has some or all of the functions of the first-type terminal in the method described in the first aspect. For example, the functions of the communication device may have some or all of the functions in the embodiments disclosed herein, or may have the functions of implementing any one of the embodiments disclosed herein separately. The functions described can be implemented through hardware or by executing corresponding software through hardware. The hardware or software includes one or more units or modules corresponding to the above functions.

In an implementation, the structure of the communication device may include a processing module configured to support the communication device in executing the corresponding functions in the above method. The communication device may also include a storage module for coupling with the processing module, which stores necessary computer programs and data for the communication device.

As an example, the processing module may be a processor, the transceiver module may be a transceiver or a communication interface, and the storage module may be a memory.

In an implementation, the communication device includes: a processing module, configured to determine a first number of transmissions for the first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

In a fourth aspect, embodiments of the present disclosure provide another communication device. The communication device has some or all of the functions of the first-type terminal in the method described in the second aspect. For example, the functions of the communication device may have some or all of the functions in the embodiments disclosed herein, or may have the functions of implementing any one of the embodiments disclosed herein separately. The functions described can be implemented through hardware or by executing corresponding software through hardware. The hardware or software includes one or more units or modules corresponding to the above functions.

In an implementation, the structure of the communication device may include a processing module and a transceiver module. The processing module is configured to support the communication device in executing the corresponding functions in the above method. The transceiver module is configured to support communication between the communication device and other devices. The communication device may also include a storage module for coupling with the processing module, which stores necessary computer programs and data for the communication device.

In an implementation, the communication device includes: a processing module, configured to determine a first number of transmissions for a first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

In a fifth aspect, embodiments of the present disclosure provide a communication device. The communication device includes a processor, which executes the method described in the first aspect when calling a computer program in a memory.

In a sixth aspect, embodiments of the present disclosure provide a communication device. The communication device includes a processor, which executes the method described in the second aspect when calling a computer program in a memory.

In a seventh aspect, embodiments of the present disclosure provide a communication device. The communication device includes a processor and a memory, the memory is stored with a computer program, and the processor is configured to execute the computer program stored in the memory, to enable the communication device to implement the method described in the first aspect.

In an eighth aspect, embodiments of the present disclosure provide a communication device. The communication device includes a processor and a memory, the memory is stored with a computer program, and the processor is configured to execute the computer program stored in the memory, to enable the communication device to implement the method described in the second aspect.

In a ninth aspect, embodiments of the present disclosure provide a communication device. The communication device includes a processor and an interface circuit. The interface circuit is configured to receive code instructions and transmit the code instructions to the processor. The processor is configured to run the code instructions to enable the device to implement the method described in the first aspect.

In a tenth aspect, embodiments of the present disclosure provide a communication device. The communication device includes a processor and an interface circuit. The interface circuit is configured to receive code instructions and transmit the code instructions to the processor. The processor is configured to run the code instructions to enable the device to implement the method described in the second aspect.

In an eleventh aspect, embodiments of the present disclosure provide a communication system. The system includes the communication device described in the third aspect and the communication device described in the fourth aspect, or the system includes the communication device described in the fifth aspect and the communication device described in the sixth aspect, or the system includes the communication device in the seventh aspect and the communication device described in the eighth aspect, or the system includes the communication device described in the ninth aspect and the communication device described in the tenth aspect.

In a twelfth aspect, embodiments of the present disclosure provide a computer readable storage medium, configured to store instructions used by the above terminal device, which when executed, enable the terminal device to implement the method described in the first aspect.

In a thirteenth aspect, embodiments of the present disclosure provide a readable storage medium, configured to store instructions used by the above network device, which when executed, enable the network device to implement the method described in the second aspect.

In a fourteenth aspect, the present disclosure further provides a computer program product, including a computer program, which when executed on a computer, enable the computer to implement the method described in the first aspect.

In a fifteenth aspect, the present disclosure further provides a computer program product, including a computer program, which when executed on a computer, enable the computer to implement the method described in the second aspect.

In a sixteenth aspect, the present disclosure provides a chip system, including at least one processor and interface, configured to support the terminal device in implementing the functions involved in the first aspect, such as determining or processing at least one of the data and information involved in the above method. In one possible design, the chip system further includes a memory for storing necessary computer programs and data for the terminal device. The chip system may be composed of chips or include chips and other discrete devices.

In a seventeenth aspect, the present disclosure provides a chip system, including at least one processor and interface, configured to support the terminal device in implementing the functions involved in the second aspect, such as determining or processing at least one of the data and information involved in the above method. In one possible design, the chip system further includes a memory for storing necessary computer programs and data for the terminal device. The chip system may be composed of chips or include chips and other discrete devices.

In an eighteenth aspect, the present disclosure provides a computer program, which when executed on a computer, enable the computer to implement the method described in the first aspect.

In a nineteenth aspect, the present disclosure provides a computer program, which when executed on a computer, enable the computer to implement the method described in the second aspect.

### BRIEF DESCRIPTION OF THE DRAWINGS

In order to provide a clearer explanation of the technical solutions in embodiments of the disclosure or background technology, the accompanying drawings required in the embodiments of the disclosure or background technology will be described below.
Fig. 1 is a schematic diagram of a communication system provided in an embodiment of the present disclosure.
Fig. 2 is a flowchart of a random access method provided in an embodiment of the present disclosure.
Fig. 3 is a flowchart of another random access method provided in an embodiment of the present disclosure.
Fig. 4 is a flowchart of yet another random access method provided in an embodiment of the present disclosure.
Fig. 5 is a flowchart of yet another random access method provided in an embodiment of the present disclosure.
Fig. 6 is a flowchart of yet another random access method provided in an embodiment of the present disclosure.
Fig. 7 is a flowchart of yet another random access method provided in an embodiment of the present disclosure.
Fig. 8 is a flowchart of yet another random access method provided in an embodiment of the present disclosure.
Fig. 9 is a flowchart of yet another random access method provided in an embodiment of the present disclosure.
Fig. 10 is a flowchart of yet another random access method provided in an embodiment of the present disclosure.
Fig. 11 is a flowchart of yet another random access method provided in an embodiment of the present disclosure.
Fig. 12 is a flowchart of yet another random access method provided in an embodiment of the present disclosure.
Fig. 13 is a flowchart of yet another random access method provided in an embodiment of the present disclosure.
Fig. 14 is a flowchart of yet another random access method provided in an embodiment of the present disclosure.
Fig. 15 is a flowchart of yet another random access method provided in an embodiment of the present disclosure.
Fig. 16 is a block diagram of a communication device provided in an embodiment of the present disclosure.
Fig. 17 is a block diagram of another communication device provided in an embodiment of the present disclosure.
Fig. 18 is a block diagram of a chip provided in an embodiment of the present disclosure.

### DETAILED DESCRIPTION

In order to better understand a random access method disclosed in embodiments of the present disclosure, the following will first describe the communication system applicable to the embodiments of the present disclosure.

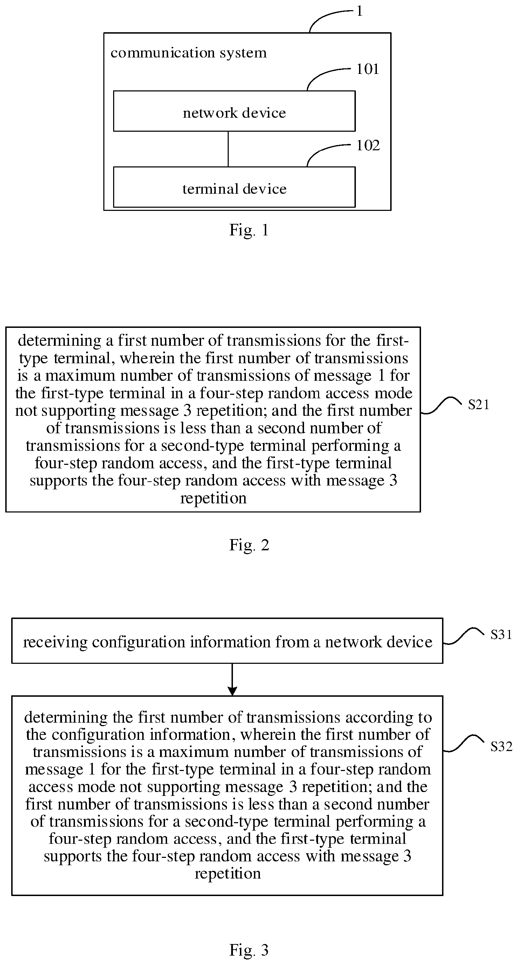

Please refer to Fig. 1, which is a schematic diagram of a communication system provided in an embodiment of the present disclosure. The communication system may include, but is not limited to, one network device and one terminal device. The number and form of devices shown in Fig. 1 are for example only and do not constitute limitations to the embodiments of the present disclosure. In practical applications, it may include two or more network devices and two or more terminal devices. The communication system shown in Fig. 1 includes a network device 101 and a terminal device 102 as an example.

It should be noted that the technical solution of embodiments of the present disclosure can be applied to various communication systems, for example, long term evolution (LTE) systems, fifth generation (5G) mobile communication systems, 5G new radio (NR) systems, or other future new mobile communication systems.

The network device 101 in embodiments of the present disclosure is an entity on the network side for transmitting or receiving signals. For example, the network device 101 may be an evolved NodeB (eNB), transmission reception point (TRP), next generation NodeB (gNB) in NR systems, base station in other future mobile communication systems, or access node in wireless fidelity (WiFi) systems. The embodiments do not limit the specific technology and device form adopted by network devices. The network device provided in embodiments of the present disclosure may be composed of a central unit (CU) and a distributed unit (DU), where the CU may also be referred to as a control unit. Using the CU-DU structure, the protocol layer of the network device, such as the base station, can be separated, with some protocol layer functions placed under centralized control by the CU, and the remaining or all protocol layer functions distributed within the DU, which is centrally controlled by the CU.

The terminal device 102 in embodiments of the present disclosure is an entity on the user side for receiving or transmitting signals, such as a mobile phone. The terminal device may also be referred to as a terminal, a user equipment (UE), a mobile station (MS), a mobile terminal device (MT), etc. The terminal device may include cars with communication capabilities, smart cars, mobile phones, wearable devices, tablets, computers with wireless transmission and reception capabilities, virtual reality (VR) terminal devices, augmented reality (AR) terminal devices, wireless terminal devices in industrial control, wireless terminal devices in self driving, wireless terminal devices in remote medical surgery, wireless terminal devices in smart grids, wireless terminal devices in transportation safety, wireless terminal devices in smart city, wireless terminal devices in smart home, and so on. The embodiments of the present disclosure do not limit the specific technology and device form adopted by the terminal device.

It can be understood that the above-mentioned functional devices may be network components in hardware devices, software functions running on dedicated hardware, or virtualization functions instantiated on platforms (such as cloud platforms).

With the development of technology, in order to adapt to new communication scenarios, Coverage Enhancement terminals (CE UE) have been proposed. Therefore, there are scenarios where coverage enhanced terminals (CE UE) and regular terminals (legacy UE) coexist. In embodiments of the present disclosure, the first-type terminal may be a CE UE, which can use a four-step random access that supports message 3 repetition or a four-step random access that does not support message 3 repetition. The second-type terminal may be a legacy UE, which can only use the four-step random access that does not support message 3 repetition.

It should be noted that the communication system described in embodiments of the present disclosure is intended to provide a clearer explanation of the technical solution of the embodiments of the present disclosure, and does not constitute a limitation on the technical solution provided in embodiments of the present disclosure. It is known to those skilled in the art that with the evolution of the system architecture and the emergence of new business scenarios, the technical solution provided in embodiments of the present disclosure is also applicable to similar technical problems.

In related technologies, the first-type terminal that supports four-step random access with message 3 repetition selects a certain type of resources when using the four-step random access that does not support message 3 repetition at the beginning for performing random access. So, before a number of transmissions of message 1 reaches the maximum number of transmission of message 1 in performing the four-step random access and, this type of resources should always be used for random access. The maximum number of transmissions of the first-type terminal, if using the maximum number of transmissions of message 1 of the second-type terminal that does not support message 3 repetition in performing the four-step random access, may result in that the first-type terminal initiates too much unnecessary random access, increasing transmission delay and energy consumption.

Based on this, embodiments of the present disclosure provide a random access method and apparatus, to at least solve the problems of long random access time, large transmission delay and high power consumption of the first-type terminal in the related art.

The following provides a detailed introduction to the random access method and apparatus provided in this disclosure, in conjunction with the accompanying drawings.

Please refer to Fig. 2, which is a flowchart of a random access method provided in an embodiment of the present disclosure.

As shown in Fig. 2, the method is performed by the first-type terminal, and the method may include, but is not limited to the following step:
S21, determining the first number of transmissions for the first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

In embodiments of the present disclosure, the first-type terminal supports both the four-step random access mode supporting message 3 repetition, and the four-step random access mode not supporting message 3 repetition.

In embodiments of the present disclosure, the first-type terminal can operate in two modes: the four-step random access that supports message 3 repetition and the four-step random access that does not support message 3 repetition. The first-type terminal may be a CE (coverage enhancement) terminal. The second-type terminal can operate in one mode: the four-step random access that does not support message 3 repetition. The second-type terminal may be a legacy terminal. The first-type terminal can use either four-step random access that supports message 3 repetition or four-step random access that does not support message 3 repetition. The second-type terminal can only use four-step random access that does not support message 3 repetition.

In embodiments of the present disclosure, the first number of transmissions for the first-type terminal is determined, wherein the first number of transmissions for the first-type terminal is the maximum number of transmissions for the first-type terminal in the four-step random access mode that does not support message 3 repetition. In embodiments of the present disclosure, the second number of transmissions for the second-type terminal is the maximum number of transmissions of message 1 for the second-type terminal in performing the four-step random access. The first number of transmissions is less than the second number of transmissions.

In embodiments of the present disclosure, the first number of transmissions for the first-type terminal is less than the second number of transmissions for the second-type terminal. In case that the second number of transmissions for the second-type terminal is relatively large, the maximum number of transmissions of message 1 of the first-type terminal using the four-step random access that does not support message 3 repetition is less than the second number of transmissions for the second-type terminal, so that the first-type terminal can avoid initiating too much unnecessary random access, shorten the delay of random access, and reduce the energy consumption of the first-type terminal.

That is, in the related art, when the first-type terminal uses the four-step random access that does not support message 3 repetition, the maximum number of transmissions of message 1 (i.e., the number of times Msg 1 is transmitted repeatedly) is the second number of transmissions of message 1 of the second-type terminal when using the four-step random access that does not support message 3 repetition, and in this case, the first-type terminal needs to retransmit Msg 1 for multiple times. In embodiments of the present disclosure, when the first-type terminal is working the four-step random access mode that does not support message 3 repetition, the maximum number of transmissions of Msg 1 is set to the first number of transmissions, wherein the first number of transmissions < the second number of transmissions.

That is, in the related art, the maximum number of transmissions of Msg 1 of the CE UE and the legacy UE working in the four-step random access mode that does not support Msg 3 repetition are the same. However, in one possible implementation of embodiments of the present disclosure, the maximum number of transmissions of Msg 1 of the CE UE working in the four-step random access mode that does not support Msg 3 repetition is less than the maximum number of transmissions of Msg 1 of the legacy UE working in the four-step random access mode that does not support Msg 3 repetition.

By implementing embodiments of the present disclosure, the first number of transmissions for the first-type terminal is determined, wherein the first number of transmissions is the maximum number of transmissions of message 1 for the first-type terminal in the four-step random access mode not supporting message 3 repetition; and the first number of transmissions is less than the second number of transmissions for the second-type terminal performing the four-step random access, and the first-type terminal supports the four-step random access with message 3 repetition. Therefore, the first-type terminal can avoid initiating too much unnecessary random access, shorten the delay of random access, and reduce the energy consumption of the first-type terminal.

For ease of understanding, this disclosure uses an example to illustrate. For example, the first-type terminal uses the four-step random access method that does not support message 3 repetition at the center of the cell. During the random access procedure, the first-type terminal may move to the edge of the cell, and may fail due to issues such as uplink coverage, random access response timeout, and competition resolution timeout. The first-type terminal will retransmit message 1 and initiate random access again until the transmission of message 1 reaches the first number of transmissions, and if the random access still fails, switch to the method that supports message 3 repetition for four-step random access. If the first number of transmissions set by the CE UE is too large, it will initiate too many unnecessary random accesses. Of course, this scenario is only one of the various scenarios that may be applied in the embodiments of the present disclosure, which is not limited in embodiments of the present disclosure.

Please refer to Fig. 3, which is a flowchart of another random access method provided in an embodiment of the present disclosure.

As shown in Fig. 3, the method is performed by the first-type terminal. The method may include, but is not limited to following steps:
S31, receiving configuration information from a network device;
S32, determining the first number of transmissions according to the configuration information, wherein the first number of transmissions is the maximum number of transmissions of message 1 for the first-type terminal in the four-step random access mode that does not support message 3 repetition, the first number of transmissions is less than the second number of transmissions for the second-type terminal in performing four-step random access, and the first-type terminal supports the four-step random access that supports message 3 repetition.

In embodiments of the present disclosure, the first-type terminal is the terminal that supports the four-step random access that supports message 3 repetition. The first-type terminal may be a CE (coverage enhancement) terminal. The second-type terminal may be a legacy terminal that supports the four-step random access that does not support message 3 repetition. The first-type terminal can use either four-step random access that supports message 3 repetition or four-step random access that does not support message 3 repetition. The second-type terminal can only use four-step random access that does not support message 3 repetition.

In embodiments of the present disclosure, the first number of transmissions for the first-type terminal is determined, wherein the first number of transmissions is the maximum number of transmissions of message 1 for the first-type terminal when using the four-step random access mode that does not support message 3 repetition. In embodiments of the present disclosure, the second number of transmissions is the maximum number of transmissions of message 1 for the second-type terminal when performing the four-step random access by using the four-step random access mode that does not support message 3 repetition. The first number of transmissions is less than the second number of transmissions.

In embodiments of the present disclosure, the first number of transmissions for the first-type terminal is less than the second number of transmissions for the second-type terminal. In case that the second number of transmissions for the second-type terminal is relatively large, when the first-type terminal uses the four-step random access mode that does not support message 3 repetition, the maximum number of transmissions of message 1 is set as the first number of transmissions, and the first number of transmissions is less than the second number of transmissions. Therefore, the first-type terminal can avoid initiating too much unnecessary random access, shorten the delay of random access, and reduce the energy consumption of the first-type terminal.

In one possible implementation of embodiments of the present disclosure, the first-type terminal receives the configuration information from the network device, and determines the first number of transmissions according to the configuration information. The first-type terminal can determine the first number of transmissions through configuration or indication by the network device. In another possible implementation of embodiments of the present disclosure, the first-type terminal determines the first number of transmissions according to a communication protocol. In yet another possible implementation of embodiments of the present disclosure, the first-type terminal determines the first number of transmissions for negotiating with a base station.

The configuration information from the network device can directly configure the value of the first number of transmissions, or can associate the value of the first number of transmissions with other determined parameters through a certain condition, or can associate the value of the first number of transmissions with values of other synchronously configured parameters through a certain condition, which is not limited in embodiments of the present disclosure.

It should be noted that steps S31 and S32 can be implemented separately or in combination with any other step in embodiments of the present disclosure, such as step S21 in the embodiments of the present disclosure, which is not limited in embodiments of the present disclosure.

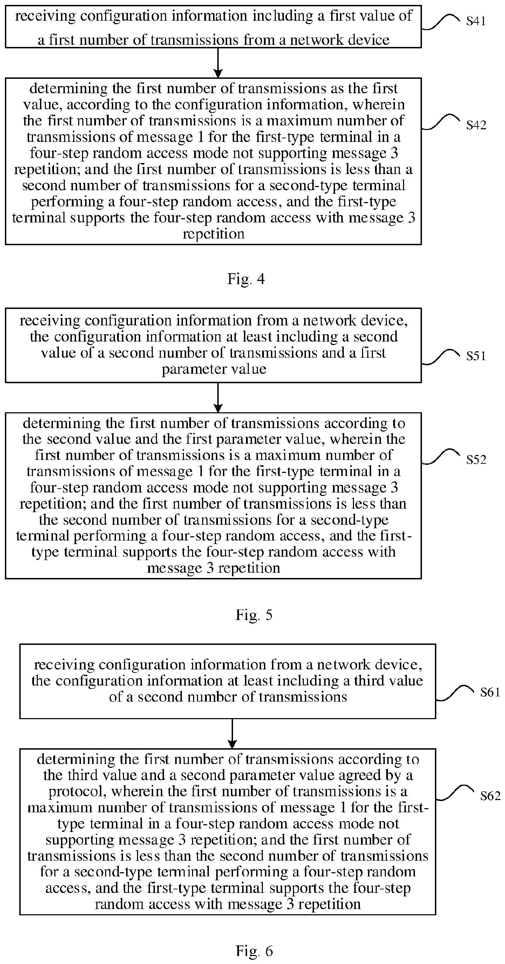

Please refer to Fig. 4, which is a flowchart of yet another random access method provided in an embodiment of the present disclosure.

As shown in Fig. 4, the method is performed by the first-type terminal, and the method may include, but is not limited to following steps:
S41, receiving configuration information including a first value of the first number of transmission from the network device;
S42, determining the first number of transmissions as the first value according to the configuration information, wherein the first number of transmissions is the maximum number of transmissions of message 1 for the first-type terminal in the four-step random access mode that does not support message 3 repetition, the first number of transmissions is less than the second number of transmissions for the second-type terminal in performing four-step random access, and the first-type terminal supports the four-step random access that supports message 3 repetition.

In embodiments of the present disclosure, the configuration information configured by the network device includes the first value of the first number of transmissions, so that the first number of transmissions can be determined as the first value according to the configuration information.

In an exemplary embodiment, the configuration information configured by the network device includes the first value of 10 for the first number of transmissions, so that the first number of transmissions can be determined as 10 according to the configuration information.

In another exemplary embodiment, if both the network device and the terminal can determine identifiers corresponding to multiple candidate first number of transmissions, the configuration information only needs to include the identifier. The network device and the terminal can determine the candidate first number of transmissions as well as the identifier corresponding to each candidate first number of transmissions based on communication standards, or the network device can send each candidate first number of transmissions and its corresponding identifier to the terminal, or each candidate first number of transmissions and its corresponding identifier are pre-configured in the network device and the terminal.

It should be noted that the above examples are only for illustrative purposes and are not intended as specific limitations on embodiments of the disclosure. The first value may also be other conditions that meet the requirements, which is not limited in embodiments of the disclosure.

It should be noted that steps S41 and S42 can be implemented separately or in combination with any other step in embodiments of the present disclosure, such as step S21 and/or S31 and S32 in the embodiments of the present disclosure, which is not limited in embodiments of the present disclosure.

Please refer to Fig. 5, which is a flowchart of yet another random access method provided in an embodiment of the present disclosure.

As shown in Fig. 5, the method is performed by the first-type terminal, and the method may include but is not limited to following steps:
S51, receiving configuration information from the network device, wherein the configuration information at least includes a second value of the second number of transmissions and a first parameter value;
S52, determining the first number of transmissions according to the second value and the first parameter value, wherein the first number of transmissions is the maximum number of transmissions of message 1 for the first-type terminal in the four-step random access mode that does not support message 3 repetition, the first number of transmissions is less than the second number of transmissions for the second-type terminal in performing four-step random access, and the first-type terminal supports the four-step random access that supports message 3 repetition.

In embodiments of the present disclosure, the configuration information configured by the network device includes the second value of the second number of transmissions and the first parameter value.

The second value of the second number of transmissions may be any of 3, 4, 5, 6, 7, 8, 10, 20, 50, 100 and 200, which is not specifically limited in embodiments of the present disclosure. The second value of the second number of transmissions can be set arbitrarily based on actual usage.

In embodiments of the present disclosure, the first parameter value may be a separate numerical value, which can be arbitrarily set according to the actual usage (the base station notifies the UE after setting, or the base station negotiates with the UE). Alternatively, the first parameter value may also be a numerical value selected by the network device from the agreed value range in the protocol and notified to the UE. Alternatively, the first parameter value may also be a numerical value determined by the network device and the UE respectively from the agreed value range according to the protocol. This is not specifically limited in embodiments of the present disclosure.

In embodiments of the present disclosure, determining the first number of transmissions according to the second value and the first parameter value may be as follows. A corresponding calculation formula is set, and the first number of transmissions can be obtained by calculating according to the second value, the first parameter value and the corresponding calculation formula. Alternatively, it is possible to look up a table based on the second value and the first parameter value to obtain the first number of transmissions.

In some embodiments, the first number of transmissions is determined as the second value minus the first parameter value, wherein the first parameter value is less than the second value.

In embodiments of the present disclosure, the first number of transmissions is determined as the second value minus the first parameter value, that is, the first number of transmissions is a difference between the second value and the first parameter value, wherein the first parameter value is less than the second value.

In an exemplary embodiment, the second value of the second number of transmissions is 50, the first parameter value is 20. By subtracting the first parameter value 20 from the second value 50, the first number of transmissions can be determined as 30.

In another exemplary embodiment, the second value of the second number of transmissions is 50, the first parameter value is 10. By subtracting the first parameter value 10 from the second value 50, the first number of transmissions can be determined as 40.

It should be noted that the above examples are for illustrative purposes only and do not serve as specific limitations on embodiments of the present disclosure. The second number of transmissions and the first parameter value in embodiments of the present disclosure are not limited to the above values and can be set arbitrarily according to actual usage needs, which is not limited in embodiments of the present disclosure.

In some embodiments, the first number of transmissions is determined as a product of the second value and the first parameter value, wherein the first parameter value is greater than 0 and less than 1.

In an exemplary embodiment, the second value of the second number of transmissions is 50 and the first parameter value is 0.2. By multiplying the second value 50 by the first parameter value 0.2, the first number of transmissions can be determined as 10.

In another exemplary embodiment, the second value of the second number of transmissions is 50 and the first parameter value is 0.5 By multiplying the second value 50 by the first parameter value 0.5 the first number of transmissions can be determined as 25.

In an implementation of the present disclosure, the first parameter value may be an offset of the first number of transmissions relative to the second value, or a scaling factor of the first number of transmissions relative to the second value.

It should be noted that the above examples are for illustrative purposes only and do not serve as specific limitations on embodiments of the present disclosure. The second number of transmissions and the first parameter value in embodiments of the present disclosure are not limited to the above values and can be set arbitrarily according to actual usage needs, which is not limited in embodiments of the present disclosure.

It should be noted that steps S51 and S52 can be implemented separately or in combination with any other step in embodiments of the present disclosure, such as step S21 and/or S31 and S32 and/or S41 and S42 in the embodiments of the present disclosure, which is not limited in embodiments of the present disclosure.

Please refer to Fig. 6, which is a flowchart of yet another random access method provided in an embodiment of the present disclosure.

As shown in Fig. 6, the method is performed by the first-type terminal, and the method may include, but is not limited to following steps:
S61, receiving configuration information from the network device, wherein the configuration information at least includes a third value of the second number of transmissions;
S62, determining the first number of transmissions according to the third value and a second parameter value determined by a protocol, wherein the first number of transmissions is the maximum number of transmissions of message 1 for the first-type terminal in the four-step random access mode that does not support message 3 repetition, the first number of transmissions is less than the second number of transmissions for the second-type terminal in performing the four-step random access, the first-type terminal supports the four-step random access that supports message 3 repetition.

In embodiments of the present disclosure, the configuration information configured by the network device includes the third value of the second number of transmissions, and the second parameter value is agreed by the protocol.

The third value of the second number of transmissions may be any of 3, 4, 5, 6, 7, 8, 10, 20, 50, 100 and 200, which is not specifically limited in embodiments of the present disclosure. The third value of the second number of transmissions can be set arbitrarily based on actual usage.

In embodiments of the present disclosure, the second parameter value may be a separate numerical value, which can be arbitrarily set according to the actual usage (the base station notifies the UE after setting, or the base station negotiates with the UE). Alternatively, the second parameter value may also be a numerical value selected by the network device from the agreed value range in the protocol and notified to the UE. Alternatively, the second parameter value may also be a numerical value determined by the network device and the UE respectively from the agreed value range according to the protocol. This is not specifically limited in embodiments of the present disclosure.

In embodiments of the present disclosure, determining the first number of transmissions according to the third value and the second parameter value may be as follows. A corresponding calculation formula is set, and the first number of transmissions can be obtained by calculating according to the third value, the second parameter value and the corresponding calculation formula. Alternatively, it is possible to look up a table based on the third value and the second parameter value to obtain the first number of transmissions.

In some embodiments, the first number of transmissions is determined as the third value minus the second parameter value, wherein the second parameter value is less than the third value.

In embodiments of the present disclosure, the first number of transmissions is determined as the third value minus the second parameter value, that is, the first number of transmissions is a difference between the third value and the second parameter value, wherein the second parameter value is less than the third value.

In an exemplary embodiment, the third value of the second number of transmissions is 50, the second parameter value is 20. By subtracting the second parameter value 20 from the third value 50, the first number of transmissions can be determined as 30.

In some embodiments, the first number of transmissions is determined as a product of the third value and the second parameter value, wherein the second parameter value is greater than 0 and less than 1.

In an exemplary embodiment, the third value of the second number of transmissions is 50 and the second parameter value is 0.4. By multiplying the third value 50 by the second parameter value 0.4, the first number of transmissions can be determined as 20.

In an implementation of the present disclosure, the second parameter value may be an offset of the first number of transmissions relative to the third value, or a scaling factor of the first number of transmissions relative to the third value.

It should be noted that steps S61 and S62 can be implemented separately or in combination with any other step in embodiments of the present disclosure, such as step S21 and/or S31 and S32 and/or S41 and S42 in the embodiments of the present disclosure, which is not limited in embodiments of the present disclosure.

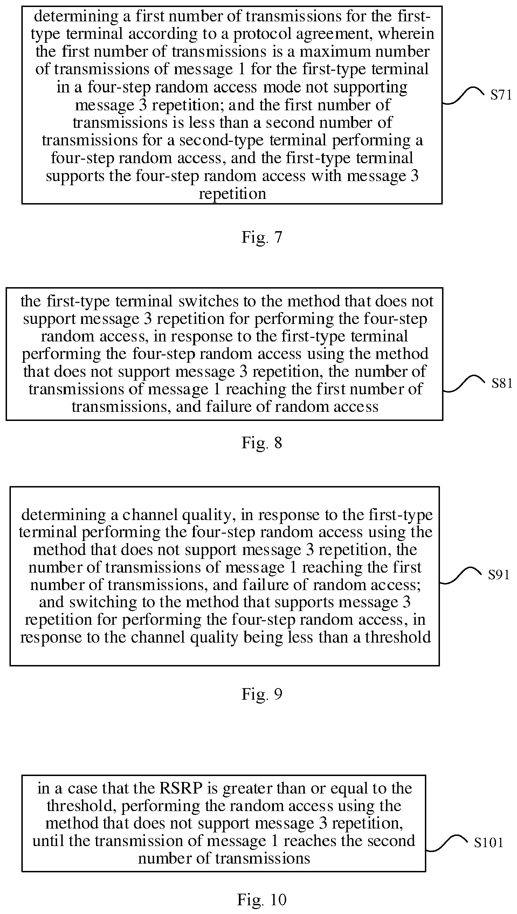

Please refer to Fig. 7, which is a flowchart of yet another random access method provided in an embodiment of the present disclosure.

As shown in Fig. 7, the method is performed by the first-type terminal, and the method may include, but is not limited to following steps:
S71, determining the first number of transmissions for the first-type terminal according to a protocol agreement, wherein the first number of transmissions is the maximum number of transmissions of message 1 for the first-type terminal in the four-step random access mode that does not support message 3 repetition, the first number of transmissions is less than the second number of transmissions for the second-type terminal in performing four-step random access, and the first-type terminal supports the four-step random access that supports message 3 repetition.

The first number of transmissions is less than the second number of transmissions for the second-type terminal in performing four-step random access, the first-type terminal supports the four-step random access that supports message 3 repetition, and the first number of transmissions is the maximum number of transmissions of message 1 for the first-type terminal in the four-step random access mode that does not support message 3 repetition.

In embodiments of the present disclosure, the first-type terminal is the terminal that supports the four-step random access that supports message 3 repetition. The first-type terminal may be a CE (coverage enhancement) terminal. The second-type terminal may be a legacy terminal that supports the four-step random access that does not support message 3 repetition. The first-type terminal can use either four-step random access that supports message 3 repetition or four-step random access that does not support message 3 repetition. The second-type terminal can only use four-step random access that does not support message 3 repetition.

In embodiments of the present disclosure, the first number of transmissions for the first-type terminal is determined, wherein the first number of transmissions is the maximum number of transmissions of message 1 for the first-type terminal when using the four-step random access mode that does not support message 3 repetition. In embodiments of the present disclosure, the second number of transmissions for the second-type terminal is the maximum number of transmissions of message 1 for the second-type terminal when performing the four-step random access.

In embodiments of the present disclosure, the first number of transmissions for the first-type terminal is less than the second number of transmissions for the second-type terminal. In case that the second number of transmissions for the second-type terminal is relatively large, the maximum number of transmissions of message 1 for the first-type terminal using the our-step random access that does not support message 3 repetition is less than the second number of transmissions for the second-type terminal. Therefore, the first-type terminal can avoid initiating too much unnecessary random access, shorten the delay of random access, and reduce the energy consumption of the first-type terminal.

In embodiments of the present disclosure, the first number of transmissions of the first-type terminal can be determined according to the protocol agreement. For example, the value of the first number of transmissions can be agreed by the protocol, or it can be agreed by the protocol that the first number of transmissions is equal to a certain known parameter, or it can be agreed by the protocol that the first number of transmissions can be obtained by a certain calculation method, which is not limited in embodiments of the present disclosure.

In some embodiments, the protocol agreement includes a fourth value of the first number of transmissions, and the first number of transmissions is determined as the fourth value according to the protocol agreement.

In embodiments of the present disclosure, the fourth value is agreed by the protocol, and the first number of transmissions is the fourth value, so that the first number of transmissions can be determined.

In an exemplary embodiment, the fourth value is agreed by the protocol as 40, then the first number of transmissions can be determined as 40.

In another exemplary embodiment, the fourth value is agreed by the protocol as 30, then the first number of transmissions can be determined as 30.

It should be noted that the above examples are for illustrative purposes only and do not serve as specific limitations on embodiments of the present disclosure. The fourth value in embodiments of the present disclosure is not limited to the above values and can be set arbitrarily according to actual usage needs, which is not limited in embodiments of the present disclosure.

It should be noted that step S71 can be implemented separately or in combination with any other step in embodiments of the present disclosure, such as step S21 and/or S31 and S32 in the embodiments of the present disclosure, which is not limited in embodiments of the present disclosure.

Please refer to Fig. 8, which is a flowchart of yet another random access method provided in an embodiment of the present disclosure.

As shown in Fig. 8, the method is performed by the first-type terminal, and the method may include, but is not limited to following steps.

S81, the first-type terminal switches to the method that does not support message 3 repetition for performing the four-step random access, in response to the first-type terminal performing the four-step random access using the method that does not support message 3 repetition, the number of transmissions of message 1 reaching the first number of transmissions, and failure of random access.

In embodiments of the present disclosure, the first-type terminal is the terminal that supports the four-step random access that supports message 3 repetition. The first-type terminal may be a CE (coverage enhancement) terminal. The second-type terminal may be a legacy terminal that supports the four-step random access that does not support message 3 repetition. The first-type terminal can use either four-step random access that supports message 3 repetition or four-step random access that does not support message 3 repetition. The second-type terminal can only use four-step random access that does not support message 3 repetition.

In embodiments of the present disclosure, the first number of transmissions is the maximum number of transmissions of message 1 for the first-type terminal when using the four-step random access mode that does not support message 3 repetition. In embodiments of the present disclosure, the second number of transmissions for the second-type terminal is the maximum number of transmissions of message 1 for the second-type terminal when performing the four-step random access.

In embodiments of the present disclosure, the first number of transmissions for the first-type terminal is less than the second number of transmissions for the second-type terminal. In case that the second number of transmissions for the second-type terminal is relatively large, the maximum number of transmissions of message 1 for the first-type terminal using the our-step random access that does not support message 3 repetition is less than the second number of transmissions for the second-type terminal.

In embodiments of the present disclosure, after determining the first number of transmissions of the first-type terminal, the first-type terminal switches to the method that supports message 3 repetition for performing the four-step random access in a case that the first-type terminal uses the method that does not support message 3 repetition for performing the four-step random access, the transmission of message 1 reaches the first number of transmissions, and the random access fails. Therefore, the first-type UE can avoid initiating too many unnecessary random accesses and directly switch to the four-step random access that supports message 3 repetition, which can shorten the delay of random access and reduce the energy consumption of the first-type terminal.

For example, the first-type terminal uses the four-step random access method that does not support message 3 repetition at the center of the cell. During the random access process, the first-type terminal may move to the edge of the cell, and may fail due to issues such as uplink coverage, random access response timeout, and competition resolution timeout. The first-type terminal will retransmit message 1 and initiate random access again until the transmission of message 1 reaches the first number of transmissions. If the random access still fails, the first-type terminal switches to the method that supports message 3 repetition for performing four-step random access. Due to the fact that the first number of transmissions is smaller than the second number of transmissions, the first-type terminal can avoid initiating too many unnecessary random accesses and directly switch to the four-step random access method that supports message 3 repetition. This can shorten the delay of random access and reduce the energy consumption of the first-type terminal.

It should be noted that step S81 can be implemented separately or in combination with any other step in embodiments of the present disclosure, such as step S21 and/or S31 and S32 and/or S41 and S42 and/or S51 and S52 and/or S61 and S62 and/or S71 in the embodiments of the present disclosure, which is not limited in embodiments of the present disclosure.

Please refer to Fig. 9, which is a flowchart of yet another random access method provided in an embodiment of the present disclosure.

As shown in Fig. 9, the method is performed by the first-type terminal, and the method may include, but is not limited to following steps:
S91, determining a channel quality, in response to the first-type terminal performing the four-step random access using the method that does not support message 3 repetition, the number of transmissions of message 1 reaching the first number of transmissions, and failure of random access; and switching to the method that supports message 3 repetition for performing the four-step random access, in response to the channel quality being less than a threshold.

In one possible implementation, the channel quality can be determined by measuring a reference signal received power (RSRP) of a synchronous signal block (SSB). In case that the RSRP is less than the threshold, the first-type terminal switches to the method that supports message 3 repetition for performing the four-step random access.

In embodiments of the present disclosure, the first-type terminal is the terminal that supports the four-step random access that supports message 3 repetition. The first-type terminal may be a CE (coverage enhancement) terminal. The second-type terminal may be a legacy terminal that supports the four-step random access that does not support message 3 repetition. The first-type terminal can use either four-step random access that supports message 3 repetition or four-step random access that does not support message 3 repetition. The second-type terminal can only use four-step random access that does not support message 3 repetition.

In embodiments of the present disclosure, the first number of transmissions is the maximum number of transmissions of message 1 for the first-type terminal when using the four-step random access mode that does not support message 3 repetition. In embodiments of the present disclosure, the second number of transmissions for the second-type terminal is the maximum number of transmissions of message 1 for the second-type terminal when performing the four-step random access.

It should be noted that, the first-type terminal can use either the four-step random access that supports message 3 repetition, or the four-step random access that does not support message 3 repetition, while the second-type terminal can use only the four-step random access that does not support message 3 repetition.

In embodiments of the present disclosure, the first number of transmissions for the first-type terminal is less than the second number of transmissions for the second-type terminal. In case that the second number of transmissions for the second-type terminal is relatively large, the maximum number of transmissions of message 1 for the first-type terminal using the our-step random access that does not support message 3 repetition is less than the second number of transmissions for the second-type terminal.

In embodiments of the present disclosure, after determining the first number of transmissions of the first-type terminal, the RSRP of the SSB is measured in a case that the first-type terminal uses the method that does not support message 3 repetition for performing the four-step random access, the transmission of message 1 reaches the first number of transmissions, and the random access fails, and the method that does not support message 3 repetition is switched to for performing the four-step random access in a case that the RSRP is less than the threshold.

For example, the first-type terminal uses the four-step random access method that does not support message 3 repetition at the center of the cell. During the random access process, the first-type terminal may move to the edge of the cell, and may fail due to issues such as uplink coverage, random access response timeout, and competition resolution timeout. The first-type terminal will retransmit message 1 and initiate random access again until the transmission of message 1 reaches the first number of transmissions. This also means that before the transmission of message 1 reaches the first number of transmissions, the first-type terminal cannot achieve random access and cannot request repetition of message 3. If the transmission of message 1 reaches the first number of transmissions and the random access still fails, the RSRP of the SSB is measured, and in a case that the RSRP is less than the threshold, the method that supports message 3 repetition is switched to for performing the four-step random access. Therefore, the first-type terminal can avoid initiating too many unnecessary random accesses and directly switch to the four-step random access method that supports message 3 repetition. This can shorten the delay of random access and reduce the energy consumption of the first-type terminal.

It should be noted that step S91 can be implemented separately or in combination with any other step in embodiments of the present disclosure, such as step S21 and/or S31 and S32 and/or S41 and S42 and/or S51 and S52 and/or S61 and S62 and/or S71 in the embodiments of the present disclosure, which is not limited in embodiments of the present disclosure.

Please refer to Fig. 10, which is a flowchart of yet another random access method provided in an embodiment of the present disclosure.

As shown in Fig. 10, the method is performed by the first-type terminal, and the method may include, but is not limited to following steps:
S101, in a case that the RSRP is greater than or equal to the threshold, performing the random access using the method that does not support message 3 repetition, until the transmission of message 1 reaches the second number of transmissions.

In embodiments of the present disclosure, the first-type terminal is the terminal that supports the four-step random access that supports message 3 repetition. The first-type terminal may be a CE (coverage enhancement) terminal. The second-type terminal may be a legacy terminal that supports the four-step random access that does not support message 3 repetition. The first-type terminal can use either four-step random access that supports message 3 repetition or four-step random access that does not support message 3 repetition. The second-type terminal can only use four-step random access that does not support message 3 repetition.

In embodiments of the present disclosure, the first number of transmissions is the maximum number of transmissions of message 1 for the first-type terminal when using the four-step random access mode that does not support message 3 repetition. In embodiments of the present disclosure, the second number of transmissions for the second-type terminal is the maximum number of transmissions of message 1 for the second-type terminal when performing the four-step random access.

In embodiments of the present disclosure, the first number of transmissions for the first-type terminal is less than the second number of transmissions for the second-type terminal. In case that the second number of transmissions for the second-type terminal is relatively large, the maximum number of transmissions of message 1 for the first-type terminal using the our-step random access that does not support message 3 repetition is less than the second number of transmissions for the second-type terminal.

In embodiments of the present disclosure, after determining the first number of transmissions of the first-type terminal, the RSRP of the SSB is measured in a case that the first-type terminal uses the method that does not support message 3 repetition for performing the four-step random access, the transmission of message 1 reaches the first number of transmissions, and the random access fails, and the method that does not support message 3 repetition is switched to for performing the four-step random access in a case that the RSRP is less than the threshold.

In embodiments of the present disclosure, the first number of transmissions of the first-type terminal and the second number of transmissions of the second-type terminal are both effective for the first-type terminal.

In an exemplary embodiment, the first number of transmissions of the first-type terminal is 10, and the second number of transmissions of the second-type terminal is 50. When the first-type terminal performs random access using the four-step random access mode that does not support message 3 repetition, if the random access still fails when the number of transmissions of message 1 reaches the first number of transmissions of 10, the RSRP is measured. If the RSRP is greater than the threshold, the four-step random access mode that does not support message 3 repetition is still used for performing random access. After reaching the first number of transmissions of 10 again, if the message 1 has already been transmitted using the same type of resources 20 times, the RSRP is measured again. If the RSRP is still greater than the threshold, then the four-step random access that does not support message 3 repetition is still used for random access, and so on, until the cumulative number of transmissions of message 1 reaches the second number of transmissions of 50. If the random access is still unsuccessful, it is declared that the access has failed, indicating that the first-type terminal cannot access the cell.

It should be noted that step S101 can be implemented separately or in combination with any other step in embodiments of the present disclosure, such as step S21 and/or S31 and S32 and/or S41 and S42 and/or S51 and S52 and/or S61 and S62 and/or S71 and/or S91 in the embodiments of the present disclosure, which is not limited in embodiments of the present disclosure.

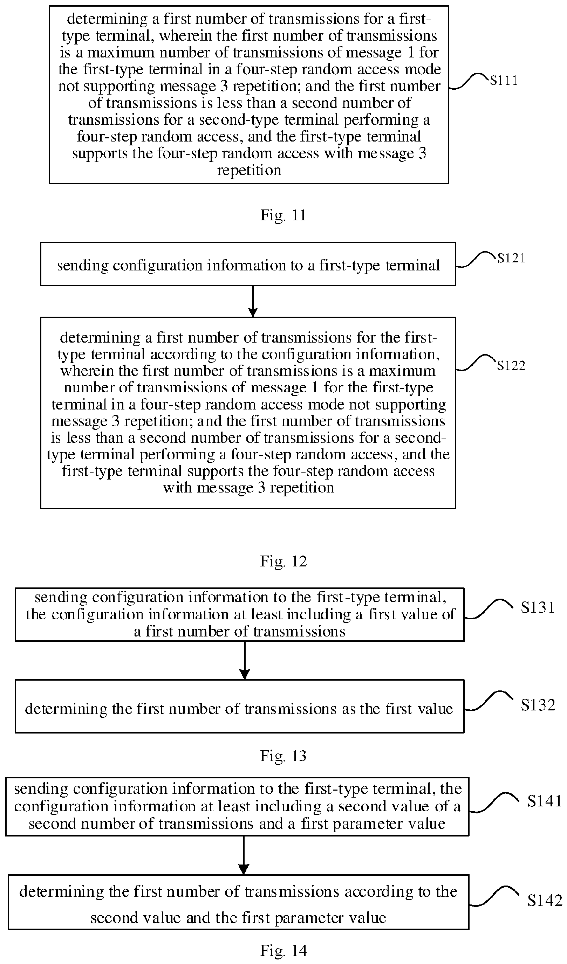

Please refer to Fig. 11, which is a flowchart of yet another random access method provided in an embodiment of the present disclosure.

As shown in Fig. 11, the method is determined by a network device, and the method may include, but is not limited to following steps:
S111, determining a first number of transmissions for a first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

In embodiments of the present disclosure, the description of S 111 can be found in the relevant description of S21 shown in Fig. 2, and will not be repeated here.

Please refer to Fig. 12, which is a flowchart of yet another random access method provided in an embodiment of the present disclosure.

As shown in Fig. 12, the method is performed by the network device, and may include, but is not limited to following steps:
S121, sending configuration information to the first-type terminal;
S122, determining the first number of transmissions for the first-type terminal according to the configuration information, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

In embodiments of the present disclosure, the description of S111 can be found in the relevant description of S21 shown in Fig. 2, and will not be repeated here.

Please refer to Fig. 13, which is a flowchart of yet another random access method provided in an embodiment of the present disclosure.

As shown in Fig. 13, the method is performed by the network device, and may include, but is not limited to following steps:
S131, sending configuration information to the first-type terminal, wherein the configuration information at least incudes a first value of the first number of transmissions;
S132, determining the first number of transmissions as the first value.

In embodiments of the present disclosure, the description of S131 and S132 can be found in the relevant description of S41 and S42 shown in Fig. 4, and will not be repeated here.

It should be noted that steps S131 and S132 can be implemented separately or in combination with any other step in embodiments of the present disclosure, such as step S111 and/or S121 and S122 in the embodiments of the present disclosure, which is not limited in embodiments of the present disclosure.

Please refer to Fig. 14, which is a flowchart of yet another random access method provided in an embodiment of the present disclosure.

As shown in Fig. 14, the method is performed by the network device, and may include but is not limited to following steps:
S141, sending configuration information to the first-type terminal, wherein the configuration information at least includes a second value of a second number of transmissions and a first parameter value;
S142, determining the first number of transmissions according to the second value and the first parameter value.

In some embodiments, the first number of transmissions is determined as the second value minus the first parameter value, wherein the first parameter value is less than the second value.

In some embodiments, the first number of transmissions is determined as a product of the second value and the first parameter value, wherein the first parameter value is less than 1 and greater than 0.

In embodiments of the present disclosure, the description of S141 and S142 can be found in the relevant description of S51 and S52 shown in Fig. 5, and will not be repeated here. It should be noted that steps S141 and S 142 can be implemented separately or in combination with any other step in embodiments of the present disclosure, such as step Sill and/or S121 and S122 and/or S131 and S 132 in the embodiments of the present disclosure, which is not limited in embodiments of the present disclosure.

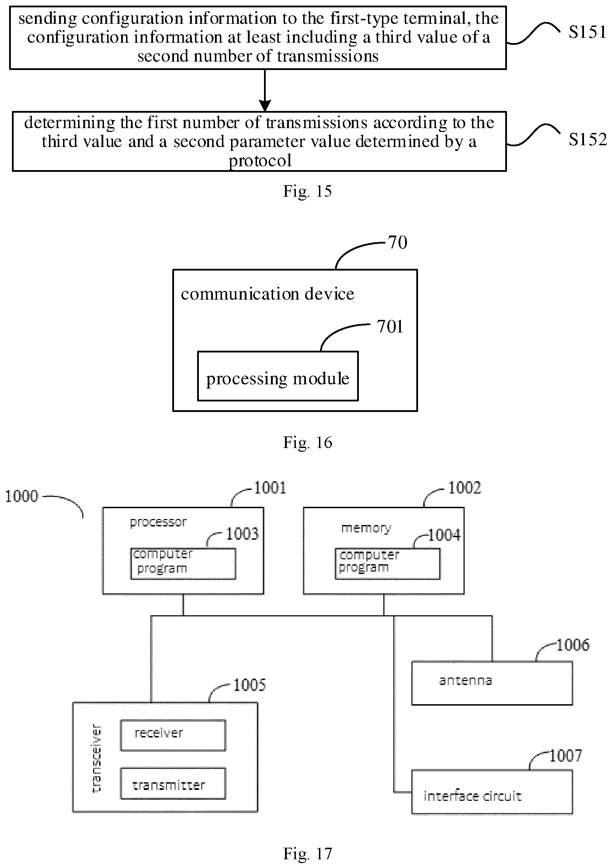

Please refer to Fig. 15, which is a flowchart of yet another random access method provided in an embodiment of the present disclosure.

As shown in Fig. 15, the method is performed by the network device, and may include, but is not limited to following steps:
S151, sending configuration information to the first-type terminal, wherein the configuration information at least includes a third value of the second number of transmissions;
S161, determining the first number of transmissions according to the third value and a second parameter value determined by a protocol.

In some embodiments, the first number of transmissions is determined as the third value minus the second parameter value, wherein the second parameter value is less than the third value.

In some embodiments, the first number of transmissions is determined as a product of the third value and the second parameter value, wherein the second parameter value is less than 1 and greater than 0.

In embodiments of the present disclosure, the description of S151 and S152 can be found in the relevant description of S61 and S62 shown in Fig. 6, and will not be repeated here. It should be noted that steps S151 and S 152 can be implemented separately or in combination with any other step in embodiments of the present disclosure, such as step Sill and/or S121 and S122 and/or S131 and S132 in the embodiments of the present disclosure, which is not limited in embodiments of the present disclosure.

In the above embodiments of the present disclosure, the methods provided are introduced from the perspectives of network device, and first-type terminal. In order to achieve the various functions of the methods provided in the embodiments of the present disclosure, the network device and the first-type terminal may include hardware structure, software module, or hardware structure plus software module to achieve the above functions. One of the above functions can be executed in the form of hardware structure, software module, or hardware structure plus software module.

Please refer to Fig. 16, which is a block diagram of a communication device 70 provided in an embodiment of the present disclosure. The communication device shown in Fig. 16 may includes a processing module 701. The communication device 70 may be a first-type terminal, or may be an apparatus in the first-type terminal, or may also be a device that can be matched and used with the first-type terminal. Alternatively, the communication device 70 may be a network device, or may be a device in the network device, or may also be a device that can be matched and used with the network device.

The communication device 70 is the first-type terminal. The processing module 701 is configured to determine a first number of transmissions for the first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

The communication device 70 is the network device. The processing module 701 is configured to determine a first number of transmissions for a first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

Please refer to Fig. 17, which is a block diagram of another communication device 1000 provided in an embodiment of the present disclosure.

The communication device 1000 may be a network device or a may be a terminal device, or may be a chip, chip system, processor, etc. that supports the network device in implementing the above method, or may be a chip, chip system, processor, etc. that supports the terminal device in implementing the above method. This device can be configured to implement the methods described in the above method embodiments, as described in the above method embodiments.

The communication device 1000 may include one or more processor 1001. The processor 1001 may be a general-purpose processor, a dedicated processor, or the like. For example, it may be a baseband processor or a central processing unit. The baseband processor can be used to process communication protocols and data, while the central processor can be used to control communication devices (such as base stations, baseband chips, terminal devices, terminal device chips, DU or CU, etc.), execute computer programs, and process data from computer programs.

Optionally, the communication device 1000 may also include one or more memory 1002, on which computer program 1004 may be stored, and the processor 1001 may execute the computer program 1004 to cause the communication device 1000 to execute the method described in the above method embodiments. Optionally, the memory 1002 may also store data. The communication device 1000 and the memory 1002 may be set separately or integrated together.

Optionally, the communication device 1000 may also include a transceiver 1005 and an antenna 1006. The transceiver 1005 can be referred to as a transceiver unit, transceiver, or transceiver circuit, etc., used to achieve transceiver functions. The transceiver 1005 may include a receiver and a transmitter, and the receiver can be referred to as a receiving machine or a receiving circuit, etc., for achieving reception functions; the transmitter can be referred to as a transmission machine or transmission circuit, etc., for achieving transmission functions.

Optionally, the communication device 1000 may also include one or more interface circuits 1007. The interface circuit 1007 is configured to receive code instructions and transmit them to the processor 1001. The processor 1001 runs the code instructions to cause the communication device 1000 to execute the method described in the above method embodiments.

The communication device 1000 is the first-type terminal. The processor 1001 is configured to execute S21 in Fig. 2; S31 and S32 in Fig. 3; S41 and S42 in Fig. 4; S51 and S52 in Fig. 5; S61 and S62 in Fig. 6; S71 in Fig. 7; S81 in Fig. 8; S91 in Fig. 9; S101 in Fig. 10.

The communication device 1000 is the network device. The processor is configured to execute S111 and S 112 in Fig. 11; S121 and S 122 in Fig. 12; S131 and S132 in Fig. 13; S141 and S142 in Fig. 14; S151 and S152 in Fig. 15.

In one implementation, the processor 1001 may include a transceiver for implementing sending and receiving functions. For example, the transceiver may be a transceiver circuit, an interface, or an interface circuit. The transceiver circuits, interfaces, or interface circuits used to achieve receiving and sending functions can be separate or integrated together. The above-mentioned transceiver circuit, interface or interface circuit can be used for reading and writing code/data, or the aforementioned transceiver circuit, interface or interface circuit can be used for signal transmission or transfer.

In one implementation, the processor 1001 may store a computer program 1003, which runs on the processor 1001 and can cause the communication device 1000 to execute the method described in the above method embodiments. The computer program 1003 may be embedded in the processor 1001, in which case the processor 1001 may be implemented by hardware.

In one implementation, the communication device 1000 may include a circuit that can achieve the functions of sending, receiving, or communicating in the aforementioned method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), N-type metal oxide semiconductor (NMOS), P-type metal oxide semiconductor (PMOS), bipolar junction transistor (BJT) Bipolar CMOS (BiCMOS), silicon germanium (SiGe), gallium arsenide (GaAs), etc.

The communication device described in the above embodiments may be a terminal device (such as the first-type terminal in the method embodiments described above) or a network device, but the scope of the communication device described in this application is not limited to this, and the structure of the communication device may not be limited by Fig. 17. The communication device may be an independent device or may be part of a larger device. For example, the communication device may be:
(1) independent integrated circuit IC, or chip, or chip system or subsystem;
(2) a set of one or more ICs, optionally including storage components for storing data and computer programs;
(3) ASIC, such as a modem;
(4) a module that can be embedded in other devices;
(5) a receiver, terminal device, intelligent terminal device, cellular phone, wireless device, handheld device, mobile unit, on-board device, cloud device, artificial intelligence device, etc;
(6) others and so on.

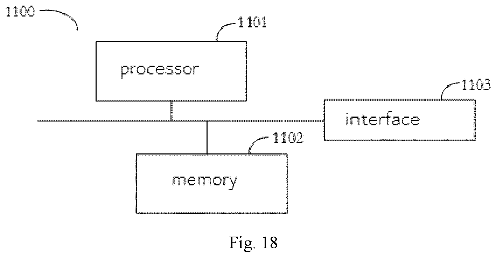

For the case where the communication device can be a chip or a chip system, please refer to Fig. 18, which is a structural diagram of a chip provided in an embodiment of the present disclosure.

As shown in Fig. 18, the chip 1100 includes a processor 1101 and an interface 1103. The number of the processor 1101 may be one or multiple, and the number of the interface 1103 may be multiple.

For the case where the chip is configured to implement the functions of the first-type terminal in an embodiment of the present disclosure:
the interface 1103 is configured to receive code instructions and transmit the code instructions to the processor;
the processor 1101 is configured to run the code instructions to perform the random access method described in some embodiments above.

For the case where the chip is configured to implement the functions of the network device in an embodiment of the present disclosure:
the interface 1103 is configured to receive code instructions and transmit the code instructions to the processor;
the processor 1101 is configured to run the code instructions to perform the random access method described in some embodiments above.

Optionally, the chip 1100 may further include a memory 1102. The memory 1102 is configured to store necessary computer programs and data.

Those skilled in the art can also understand that the various illustrative logical blocks and steps listed in the embodiments of the present disclosure can be implemented through electronic hardware, computer software, or a combination of the two. Whether such functions are implemented through hardware or software depends on the specific application and design requirements of the whole system. Technicians in this field can use various methods to achieve the described functions for each specific application, but this implementation should not be understood as exceeding the scope of protection in the embodiments of this disclosure.

The present disclosure further provides a readable storage medium on which instructions are stored, which, when executed by a computer, implement the functions of any of the above method embodiments.

The present disclosure further provide a computer program product, which, when executed by a computer, implement the functions of any of the above method embodiments.

In the above embodiments, it can be fully or partially implemented through software, hardware, firmware, or any combination thereof. When implemented using software, it can be fully or partially implemented in the form of computer program products. The computer program product includes one or more computer programs. When loading and executing the computer program on the computer, all or part of the processes or functions described in the embodiments of the present disclosure are generated. The computer may be a general-purpose computer, a specialized computer, a computer network, or other programmable devices. The computer program can be stored in a computer-readable storage medium or transmitted from one computer-readable storage medium to another, for example, the computer program may be transmitted from a website, a computer, a server or a data center to another website site, computer, server, or data center through wired (such as coaxial cable, fiber optic, digital subscriber line (DSL)) or wireless (such as infrared, wireless, microwave, etc.) methods. The computer-readable storage medium may be any available medium that the computer can access, or a data storage device such as a server or data center that includes one or more available media integrations. The available media may be magnetic media (such as floppy disks, hard drives, magnetic tapes), optical media (such as high-density digital video discs (DVDs)), or semiconductor media (such as solid state disks (SSDs)), etc.

Unless the context otherwise requires, throughout the entire specification and claims, the term "comprise" and other forms such as the third person singular form "comprises" and the present participle form "comprising" are interpreted as open and inclusive, meaning "including, but not limited to". In the description of the specification, the terms "some embodiments", "exemplary embodiments", etc. are intended to indicate that specific features, structures, materials, or characteristics related to the embodiments or examples are included in at least one embodiment or example disclosed herein. The schematic representation of the above terms may not necessarily refer to the same embodiment or example. Furthermore, the specific features, structures, materials, or features described may be included in any one or more embodiments or examples in any appropriate manner.

Ordinary technical personnel in this field can understand that the first, second, and other numerical numbers involved in this disclosure are only for the convenience of description and differentiation, and are not used to limit the scope of the embodiments of this disclosure, but also indicate the order.

"At least one" in the present disclosure may also be described as "one or more", and "multiple" may be two, three, four, or more, without limitation in this disclosure. In embodiments of the disclosure, for a kind of technical features, the technical features described in "first", "second", "third", "A", "B", "C", and "D" are distinguished, and there is no order or order of magnitude between the technical features described in "first", "second", "third", "A", "B", "C", and "D". "A and/or B" includes the following three combinations: only A, only B, and a combination of A and B.

Ordinary technical personnel in this field may realize that the units and algorithm steps of each example described in conjunction with the disclosed embodiments can be implemented in electronic hardware, or a combination of computer software and electronic hardware. Whether these functions are executed in hardware or software depends on the specific application and design constraints of the technical solution. Professional technicians may use different methods to implement the described functions for each specific application, but such implementation should not be considered beyond the scope of this application.

Technicians in the art can clearly understand that for the convenience and conciseness of the description, the specific working processes of the system, device, and unit described above can refer to the corresponding processes in the aforementioned method embodiments, and will not be repeated here.

The above is only the specific implementation of this application, but the scope of protection of this application is not limited to this. Any technical personnel familiar with this technical field can easily think of changes or replacements within the scope of technology disclosed in this application, which should be covered within the scope of protection of this application. Therefore, the protection scope of this application should be based on the protection scope of the claims.

## Claims

1. A random access method, performed by a first-type terminal, the method comprising:
determining a first number of transmissions for the first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

2. The method of claim 1, further comprising:
receiving configuration information from a network device; and
determining the first number of transmissions according to the configuration information.

3. The method of claim 2, wherein the configuration information comprises a first value of the first number of transmissions; and determining the first number of transmissions according to the configuration information comprises:
determining the first number of transmissions as the first value.

4. The method of claim 2, wherein the configuration information comprises a second value of the second number of transmissions and a first parameter value; and determining the first number of transmissions according to the configuration information comprises:
determining the first number of transmissions according to the second value and the first parameter value.

5. The method of claim 4, wherein determining the first number of transmissions according to the second value and the first parameter value comprises:
determining the first number of transmissions as the second value minus the first parameter value, wherein the first parameter value is less than the second value.

6. the method of claim 4, wherein determining the first number of transmissions according to the second value and the first parameter value comprises:
determining the first number of transmissions as a product of the second value and the first parameter value, wherein the first parameter value is greater than 0 and less than 1.

7. The method of claim 2, wherein the configuration information comprises a third value of the second number of transmissions, a second parameter value is agreed through a protocol, and the method further comprises:
determining the first number of transmissions according to the third value and the second parameter value.

8. The method of claim 7, wherein determining the first number of transmissions according to the third value and the second parameter value comprises:
determining the first number of transmissions as the third value plus the second parameter value, wherein the second parameter value is an integer greater than 0, or as the third value minus the second parameter value, wherein the second parameter value is less than the third value.

9. The method of claim 7, wherein determining the first number of transmissions according to the third value and the second parameter value comprises:
determining the first number of transmissions as a product of the third value and the second parameter value, wherein the second parameter value is greater than 0 and less than 1.

10. The method of claim 1, further comprising:
determining the first number of transmissions according to a protocol agreement.

11. The method of claim 10, wherein the protocol agreement comprising a fourth value of the first number of transmissions, and determining the first number of transmissions according to the protocol agreement comprises:
determining the first number of transmissions as the fourth value.

12. The method of any of claims 1-11, further comprising:
switching to four-step random access with message 3 repetition, in response to the first-type terminal performing the four-step random access using the mode not supporting message 3 repetition, a number of transmissions of message 1 reaching the first number of transmissions, and failure of random access.

13. The method of any of claims 1-11, further comprising:
determining a channel quality, in response to the first-type terminal performing the four-step random access using the mode not supporting message 3 repetition, a number of transmissions of message 1 reaching the first number of transmissions, and failure of random access; and
switching to four-step random access with message 3 repetition, in response to the channel quality being less than a threshold.

14. The method of claim 13, wherein determining the channel quality comprises:
measuring a reference signal received power (RSRP) of a synchronous signal block (SSB).

15. The method of claim 14, further comprising:
in a case that RSRP is greater than or equal to the threshold, performing the random access using the mode not supporting message 3 repetition, until transmission of message 1 reaches a second number of transmissions.

16. A random access method, performed by a network device, the method comprising:
determining a first number of transmissions for a first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

17. The method of claim 16, further comprising:
sending configuration information to the first-type terminal; and
determining the first number of transmissions for the first-type terminal according to the configuration information.

18. The method of claim 17, wherein the configuration information comprises a first value of the first number of transmissions; and determining the first number of transmissions for the first terminal according to the configuration information comprises:
determining the first number of transmissions as the first value.

19. The method of claim 18, wherein the configuration information comprises a second value of the second number of transmissions and a first parameter value; and determining the first number of transmissions according to the configuration information comprises:
determining the first number of transmissions according to the second value and the first parameter value.

20. The method of claim 19, wherein determining the first number of transmissions according to the second value and the first parameter value comprises:
determining the first number of transmissions as the second value minus the first parameter value, wherein the first parameter value is less than the second value.

21. The method of claim 19, wherein determining the first number of transmissions according to the second value and the first parameter value comprises:
determining the first number of transmissions as a product of the second value and the first parameter value, wherein the first parameter value is greater than 0 and less than 1.

22. The method of claim 17, wherein the configuration information comprises a third value of the second number of transmissions, a second parameter value is agreed through a protocol, and the method further comprises:
determining the first number of transmissions according to the third value and the second parameter value.

23. The method of claim 22, wherein determining the first number of transmissions according to the third value and the second parameter value comprises:
determining the first number of transmissions as the third value minus the second parameter value, wherein the second parameter value is less than the third value.

24. The method of claim 22, wherein determining the first number of transmissions according to the third value and the second parameter value comprises:
determining the first number of transmissions as a product of the third value and the second parameter value, wherein the second parameter value is greater than 0 and less than 1.

25. A communication device, comprising:
a processing module, configured to determine a first number of transmissions for a first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

26. A communication device, comprising:
a processing module, configured to determine a first number of transmissions for the first-type terminal, wherein the first number of transmissions is a maximum number of transmissions of message 1 for the first-type terminal in a four-step random access mode not supporting message 3 repetition; and the first number of transmissions is less than a second number of transmissions for a second-type terminal performing a four-step random access, and the first-type terminal supports the four-step random access with message 3 repetition.

27. A communication device, comprising a processor and a memory, the memory is stored with a computer program, and the processor is configured to execute the computer program stored in the memory, to enable the device to implement the method of any of claims 1-15.

28. A communication device, comprising a processor and a memory, the memory is stored with a computer program, and the processor is configured to execute the computer program stored in the memory, to enable the device to implement the method of any of claims 16-24.

29. A communication device, comprising a processor and an interface circuit;
the interface circuit is configured to receive code instructions and transmit the code instructions to the processor;
the processor is configured to run the code instructions to implement the method of any of claims 1-15.

30. A communication device, comprising a processor and an interface circuit;
the interface circuit is configured to receive code instructions and transmit the code instructions to the processor;
the processor is configured to run the code instructions to implement the method of any of claims 16-24.

31. A computer readable storage medium, configured to store instructions, which when executed, enable the method of any of claims 1-15 to be implemented.

32. A computer readable storage medium, configured to store instructions, which when executed, enable the method of any of claims 16-24 to be implemented.
